# FASCICULE DE BREVET EUROPEEN

(11) **EP 1 221 249 B1**
(45) Date de publication et mention de la délivrance du brevet: **20.08.2008**
(21) Numéro de dépôt: 00967944.0
(22) Date de dépôt: 25.09.2000
(51) Int. Cl.: H04M 3/56

(54) **IDENTIFICATION D'INTERVENANT DANS UNE TELEREUNION**
SPRECHERIDENTIFIZIERUNG IN EINER TELEKONFERENZ
IDENTIFICATION OF PARTICIPANT IN A TELECONFERENCE

(30) Priorité: 14.10.1999 FR 9912942
(43) Date de publication de la demande: 10.07.2002
(73) Titulaire: FRANCE TELECOM, 75015 Paris (FR)
(72) Inventeur: LANIEPCE, Sylvie, 14350 Beny Bocage (FR); CHARLET, Delphine, F-22300 Lannion (FR)
(74) Mandataire: Cabinet Bloch & Gevers
(86) Numéro de dépôt international: PCT/FR2000/002648
(87) Numéro de publication internationale: WO 2001/028214

(56) Documents cités:
- US-A- 5 450 481
- US-A- 5 483 588
- US-A- 5 668 863

## Description

La présente invention concerne les téléréunions vocales, particulièrement des conférences téléphoniques, organisées entre au moins deux groupes de participants éloignés.

Elle concerne plus particulièrement la reconnaissance de la voix d'un intervenant au cours d'une téléréunion indépendamment du contenu de son intervention afin que les autres participants à la téléréunion l'identifient. En d'autres termes, il s'agit de répondre à la question au cours d'une téléréunion "Quelle est la personne qui a parlé ou qui parle parmi tous les participants ?".

L'identification vocale, appelée également indexation de locuteur, consistant à reconnaître l'identité d'un locuteur dans un signal de voies de parole mélangées de plusieurs participants est déjà connue par l'article intitulé "REAL TIME SPEAKER INDEXING BASED ON SUBSPACE METHOD - APPLICATION TO TV NEWS ARTICLES AND DEBATE" de M. Nishida et Y. Ariki, Labs - 5ème ICSLP, Sydney, Australie, décembre 1998.

Selon cet article, pour chaque locuteur est créé préalablement un modèle vocal de référence. Puis pour reconnaître la voix d'un locuteur, par exemple la voix d'un participant dans un débat télévisé, le signal des voies mélangées relatives aux voix des participants est découpé périodiquement en segments vocaux. Les distances entre chaque segment vocal et les modèles vocaux sont comparées pour ne sélectionner que la plus petite distance sous réserve qu'elle soit supérieure à un seuil. Le locuteur correspondant à la plus petite distance est ainsi identifié comme l'intervenant pour le segment vocal.

Cependant, dans la configuration selon l'article précité, un intervenant est reconnaissable que dans des voix mélangées ne provenant que d'un faible nombre de personnes qui sont physiquement proches les unes des autres. Cette identification d'intervenant est d'autant moins performante que le nombre de participants est élevé.

Par ailleurs, le brevet US-A-5 668 863 décrit un système d'enregistrement et de reproduction d'une audioconférence pour laquelle préalablement les participants sont répartis devant des postes téléphoniques à raison d'un participant devant chaque poste. Le système enregistre préalablement des blocs de données audio de 4 secondes environ de manière à identifier le locuteur et l'ajouter à une liste de locuteurs si cela n'a pas été déjà fait. Pour identifier un locuteur au cours de la reproduction de l'audioconférence, et non immédiatement en temps réel pendant la conférence, c'est-à-dire un participant qui parle, le système identifie la source de parole et plus précisément l'interface de ligne dans le système qui dessert le poste téléphonique du participant de manière à transmettre le nom prononcé du participant.

Ce système d'enregistrement et de reproduction d'audioconférence ne distingue pas les voix de plusieurs participants regroupés devant un même poste ou terminal téléphonique, et est utilisé après l'enregistrement de l'audioconférence, et donc sans aucune identification d'intervenant pendant l'audioconférence.

La présente invention vise à identifier un intervenant parmi plusieurs groupes de participants qui sont éloignés dans le cadre d'une téléréunion, c'est-à-dire des groupes situés à proximité de terminaux éloignés, afin que chaque groupe puisse répondre plus précisément à la question "qui parle ?". L'invention apporte ainsi une solution. à la présentation des intervenants dans une téléréunion où le nombre de participants peut être élevé, en s'affranchissant de toute confusion sur l'identité de ceux-ci.

A cette fin, un procédé pour identifier un intervenant parmi des participants répartis en des groupes à proximité de terminaux téléphoniques lors d'une téléréunion gérée par l'intermédiaire d'un dispositif de conférence relié aux terminaux à travers des liaisons de transmission est caractérisé en ce qu'il comprend, après identification de la voix de l'intervenant en réception dans les liaisons par le dispositif de conférence les étapes de :
diffuser un identifiant de l'intervenant identifié dans les liaisons depuis le dispositif de conférence vers les terminaux, et
restituer l'identifiant de l'intervenant dans les terminaux.

Grâce à l'invention, l'identité des intervenants au cours de la téléréunion est indiquée à tous les participants au fur et à mesure des prises de parole.

L'identifiant de l'intervenant comprend au moins le nom du participant et peut être de préférence complété par au moins une désignation du groupe auquel il appartient, ou le nom de la société de l'intervenant, ou de toute autre information utile à l'identification de l'intervenant pour les participants. L'identifiant d'un participant peut être obtenu par reconnaissance de parole dans le dispositif de conférence après que celui-ci ait analysé une phrase d'apprentissage contenant l'identifiant prononcé par le participant et ainsi ait constitué un modèle vocal de l'identifiant vérifié par le participant. L'identifiant peut être également saisi au clavier d'un terminal pour sa reconnaissance vocale ultérieure.

En cas d'échanges conversationnels rapides pouvant engendrer des difficultés d'identification vocale, l'invention prévoit que l'identifiant ne soit diffusé que vers des terminaux en réponse respectivement à des demandes de ceux-ci au dispositif de conférence.

Selon une première variante, l'identifiant de l'intervenant est diffusé par le dispositif de conférence sous forme de message vocal en coupure ou en superposition de signaux vocaux de participant dans les liaisons et est restitué acoustiquement par les terminaux. Selon une deuxième variante, l'identifiant de l'intervenant est diffusé par le dispositif de conférence sous forme de message de signalisation dans les liaisons et est restitué visuellement dans les terminaux par afficheurs ou écrans de ceux-ci.

Selon certaines applications, le dispositif de conférence, c'est-à-dire les fonctions principales de celui-ci, peut constituer un pont de conférence amélioré, ou peut être inclus dans l'un des terminaux, ou dans un commutateur téléphonique privé desservant les terminaux.

Par exemple, lors d'une communication téléphonique entre deux postes téléphoniques ou radiotéléphoniques, un participant devant l'un des postes équipé du dispositif de conférence a connaissance de l'identité de l'intervenant en tant que l'un d'au moins deux participants devant l'autre poste.

Selon une autre caractéristique de l'invention, qui est de préférence à mettre en oeuvre pour un nombre de groupes de participants élevé, l'identification de l'intervenant dans le dispositif de conférence comprend les étapes de :
- rechercher en réception la plus active des liaisons,
- identifier le groupe correspondant à la plus active liaison en réception,
- déterminer la plus grande similitude entre un segment vocal dans la plus active liaison et des modèles vocaux des participants appartenant au groupe identifié, et
- identifier le participant correspondant à la plus grande similitude déterminée, en tant qu'intervenant.

Grâce à la caractéristique ci-dessus, la recherche de la voix d'un intervenant est effectuée dans l'ensemble des voix des participants appartenant au groupe identifié, et non parmi les voix de tous les participants disséminés autour des terminaux, ce qui rend plus fiable l'identification d'intervenant.

L'étape de rechercher en réception la plus active des liaisons peut consister à rechercher la plus grande des puissances moyennes de segments vocaux dans les voies de réception des lignes de transmission à condition qu'elle soit supérieure à un seuil prédéterminé.

Lorsque la plus grande similitude déterminée est inférieure à un seuil prédéterminé, le participant correspondant à la plus grande similitude déterminée peut être considéré comme non identifié, un message d'intervenant inconnu étant alors diffusé vers les terminaux.

Les modèles vocaux des participants sont créés et mis à jour dans le dispositif de conférence au plus tard au début de la téléréunion, et peuvent résulter de l'analyse vocale d'un genre de phrase excédant une durée minimale prédéterminée, de préférence contenant au moins une partie d'identifiant de participant.

Le procédé d'identification peut comprendre une étape de déterminer la similitude entre le segment vocal dans la plus active liaison en réception et un modèle vocal de prise de parole multiple, de préférence spécifique au nombre de participants dans le groupe identifié, afin que le dispositif de conférence diffuse un message de prise de parole multiple vers les terminaux lorsque ladite similitude déterminée est supérieure à un seuil prédéterminé.

Le procédé d'identification peut encore comprendre une étape de déterminer la similitude entre le segment vocal dans la plus active liaison en réception et le modèle vocal d'un dernier intervenant afin que le dispositif de conférence ne diffuse aucun identifiant, ou ne diffuse l'identifiant du dernier intervenant que périodiquement vers les terminaux ou que vers des terminaux respectivement en réponse à des demandes de ceux-ci au dispositif de conférence, lorsque ladite similitude est supérieure à un seuil prédéterminé.

L'invention concerne également un dispositif de conférence qui comprend un moyen pour détecter périodiquement la plus active liaison en réception afin d'identifier le groupe correspondant à la plus active liaison en réception, un moyen pour comparer périodiquement un segment vocal dans la plus active liaison en réception avec des modèles vocaux mémorisés des participants appartenant au groupe identifié afin d'identifier le participant, en tant qu'intervenant, correspondant à la plus grande similitude entre ledit segment vocal et les modèles vocaux, un moyen pour établir un identifiant de l'intervenant identifié, et un moyen pour diffuser l'identifiant d'intervenant dans des liaisons vers des terminaux.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un système de téléréunion de type conférence téléphonique selon l'invention ;
- la figure 2 est un bloc-diagramme schématique d'un pont de conférence inclus dans le système de la figure 1 ;
- la figure 3 est un algorithme d'identification d'intervenant selon l'invention, mis en oeuvré dans le système de la figure 1 ;
- la figure 4 est un algorithme de création de modèle vocal de participant inclus dans l'algorithme de la figure 3 ; et
- la figure 5 est un algorithme de recherche et d'identification d'intervenant au cours d'une téléréunion, inclus dans l'algorithme de la figure 1.

La réalisation détaillée d'un système de téléréunion décrite ci-dessous ainsi que ses variantes sont relatives à une téléréunion, dite conférence ou réunion téléphonique organisée entre plusieurs terminaux téléphoniques T₁ à T_{I}, avec **I** ≥ 2. La téléréunion est accessible par réservation ou par abonnement ou immédiatement à travers un pont de conférence téléphonique PCT.

Autour de chaque terminal Tᵢ est installé un groupe Gᵢ de participants P_{i,1} à Pᵢ,_{Ki,} où Kᵢ est un entier propre au groupe Gᵢ au moins égal à 1. Par exemple, le terminal Tᵢ peut être une table d'audioconférence autour de laquelle Kᵢ participants prennent place, ou plus simplement un poste téléphonique ou radiotéléphonique.

Ainsi, la configuration minimale d'une téléréunion selon l'invention consiste en deux groupes G₁ et G₂, avec un participant devant le terminal T₁ et deux participants devant le terminal T₂.

Le système de téléréunion comprend également un terminal T0, confondu avec le terminal T₁, tel qu'un ordinateur personnel ou une console de téléréunion spécifique, dédié à un organisateur de téléréunion, pour gérer, c'est-à-dire organiser, établir, surveiller et animer la téléréunion afin notamment d'accueillir les participants, enregistrer leurs identités et des codes d'accès personnels, réserver une téléréunion, filtrer des voies et appeler des participants pendant la téléréunion, organiser des votes, etc. Selon la réalisation illustrée, le terminal TO est en relation avec un serveur local de maintenance et d'assistance SER relié au pont de conférence PCT.

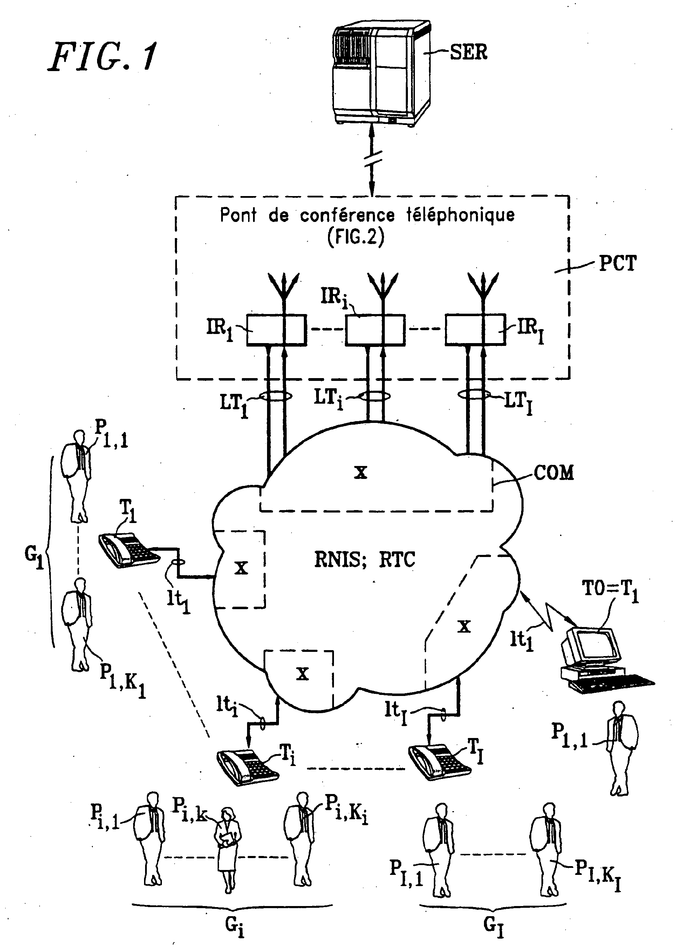

Selon une première variante, le pont PCT est relié aux terminaux T₁ à T_{I} par un réseau numérique à intégration de services RNIS. Par exemple, chaque terminal Tᵢ, avec i compris entre 1 et l'entier I, est un terminal numérique relié à un commutateur du réseau RNIS par une ligne téléphonique ltᵢ à 2 paires de fils constituant un accès bidirectionnel de base à deux canaux de parole/données B à 64 kbit/s et un canal de signalisation D à 16 kbit/s, ou par un accès bidirectionnel à 30 ou 23 canaux B à 64 kbit/s et un canal de signalisation D à 64 kbit/s lorsque le terminal est par exemple un autocommutateur numérique privé PABX. Un commutateur numérique à autonomie d'acheminement COM du réseau RNIS dessert le pont de conférence PCT par un grand nombre de lignes téléphoniques au moins supérieur à I ; en pratique, un pont peut être desservi par plusieurs centaines de lignes téléphoniques afin d'assurer simultanément plusieurs téléréunions indépendantes. A la figure 1, il est supposé qu'à chaque ligne lt₁ à lt_{I} correspond une ligne d'accès LT₁ à LT_{I} au pont PCT, ces lignes pouvant être multiplexées en sortie et démultiplexées en entrée de l'autocommutateur associé COM.

Selon une deuxième variante, les terminaux T₁ à T_{I} sont des terminaux analogiques classiquement reliés au réseau téléphonique commuté RTC par des lignes téléphoniques à deux fils lt₁ à lt_{I}. De même, le pont de conférence PCT est relié au réseau RTC par au moins I lignes téléphoniques analogiques à deux fils.

Selon encore une autre variante, un terminal Tᵢ est un terminal radiotéléphonique portable, par exemple de type GSM, DCS 1800 ou DECT, relié au réseau RTC, RNIS par le réseau fixe de radiotéléphonie correspondant, ou bien une borne privée ou public dans un tel réseau fixe.

Toutefois, selon d'autres variantes, les variantes précédentes sont combinées. Dans la suite, le pont de conférence PCT est décrit indifféremment du type de ligne téléphonique lt₁ à lt_{I} et LT₁ à LT_{I} et du type du réseau RNIS, RTC ; au regard de l'identification d'un intervenant dans une téléréunion sont principalement modifiées des interfaces de réseau IR₁ à IR_{I} dans le pont de conférence PCT reliées respectivement aux lignes téléphoniques LT₁ à LT_{I}.

L'interface de réseau IRᵢ a pour rôle principal, indépendamment du type de la ligne LTᵢ, d'extraire de la signalisation téléphonique classique et de la signalisation de téléréunion provenant du terminal Tᵢ dans le signal reçu par la ligne LTᵢ en les séparant d'un signal de voix de participant, et d'insérer de la signalisation téléphonique et de la signalisation de téléréunion destinée notamment au terminal Tᵢ dans le signal émis dans la ligne LTᵢ en la mélangeant à un signal de voix.

Comme montré à la figure, 2, un bus de signalisation BSG échange les signalisations extraites et à insérer entre les interfaces IR₁ à IR_{I} et une unité de gestion d'appels téléphoniques et de téléréunion UG.

Une voie numérique de réception de parole VRᵢ relie l'interface de réseau IRᵢ aux entrées d'un détecteur d'activité de ligne DA et d'un analyseur de voix de groupe AV. Une voie numérique d'émission de parole VEi relie la sortie d'un mélangeur audio respectif MAᵢ à l'interface de réseau IRᵢ.

Lorsque la ligne LTᵢ est du type numérique, celle-ci supporte au moins l'un des canaux B et le canal D correspondant à ceux de la ligne ltᵢ. L'interface de réseau IRᵢ comprend alors notamment un démultiplexeur-multiplexeur pour séparer les voies de parole VRᵢ et VEᵢ correspondant au canal B et la signalisation téléphonique et de téléréunion dans le canal D.

Lorsque la ligne LTᵢ est analogique, l'interface de réseau IRᵢ comprend notamment plusieurs détecteurs de signalisation téléphonique pour la prise et la libération de ligne et divers signaux de sonnerie, un convertisseur 2 fils/4 fils suivi d'un annuleur d'écho électrique, un modem et/ou un ensemble détecteur/générateur de signaux codés à multifréquence MF pour la signalisation de téléréunion relié au bus BSG, et un codeur MIC et un décodeur MIC reliés respectivement aux voies VRᵢ et VEi.

Diverses signalisations particulièrement pour la téléréunion, dite également réunion ou conférence téléphonique, y compris relatives à des commandes d'animation de l'organisateur à travers son terminal TO, et à des demandes/réponses des participants, qui sont susceptibles d'être reçues, traitées et émises par le pont de conférence téléphonique PCT, sont indiquées dans le brevet EP-0 515 241 du demandeur et dans l'article intitulé "De la Réunion Téléphone à la Conférence Téléphone" par Jean-Pierre BLIN et Jean-Pierre LEBLANC, l'écho des RECHERCHES, N° 171, 2è trimestre 1998, pages 13 à 20.

Outre ces signalisations connues, l'invention introduit un identifiant ID_{i,k} d'un participant-intervenant P_{i,k} appartenant au groupe de participants Gᵢ autour du terminal Tᵢ, dans les signaux émis par les interfaces de réseau IR₁ à IR_{I}, y compris donc l'interface de réseau IR;correspondant à l'intervenant afin qu'il vérifie que l'identifiant transmis aux autres groupes soit correct.

Les mélangeurs audio MA₁ à MA_{I} et l'unité de gestion UG assurent des fonctionnalités connues.

Un mélangeur MAᵢ additionne normalement tous les signaux de parole dans les voies de réception VR₁ à VRᵢ₋₁ et VRᵢ₊₁ à VR_{I} afin de restituer les signaux audio mélangés représentatifs des voix des participants captées par les terminaux distants du terminal Tᵢ à celui-ci. Le signal de parole reçu dans la voie VRᵢ est diffusé vers tous les mélangeurs MA₁ à Maᵢ₋₁ et Xᵢ₊₁ à MA_{I}; en variante, le signal dans la voie VRᵢ est également mélangé dans le mélangeur MAi. En pratique, le mélangeur MAi traite les signaux à additionner en fonction de certaines caractéristiques de réception du terminal Tᵢ et ne peut additionner que des signaux de voies VR₁ à VR_{I} sélectionnées en fonction de commandes produites via le bus BSG par l'unité de gestion UG en réponse à des instructions transmises par le terminal d'organisateur TO. Le mélangeur MAi transmet également des messages vocaux selon l'invention qui sont générés par une messagerie vocale MV sous la commande de l'unité de gestion UG et qui interrompent momentanément les signaux audio mélangés dans les voies VE₁ à VE_{I} ou qui viennent en superposition de ceux-ci de manière à entendre à la fois les voix des participants et un message vocal d'identifiant d'intervenant. La messagerie vocale MV transmet des messages préenregistrés aux terminaux et enregistre des réponses codées des participants.

L'unité de gestion UG gère les appels téléphoniques du pont PCT par les terminaux T₁ à T_{I}, ainsi que les appels de terminaux par le pont PCT sous la commande du terminal TO ou du serveur SER. L'unité UG gère aussi diverses étapes d'une téléréunion, y compris certaines étapes préalables à l'établissement d'une téléréunion, comme la création de modèles vocaux de participants, en fonction de programmes d'instructions établies principalement depuis le terminal d'organisateur TO. En particulier, l'organisateur suit sur l'écran du terminal TO le déroulement d'une téléréunion en affectant à chaque groupe, des identités aux participants, un code d'intervenant, d'auditeur, d'absent, de libération de terminal, etc., en étroite relation avec une mémoire de données de l'unité UG interrogeable depuis le terminal TO ou le serveur SER.

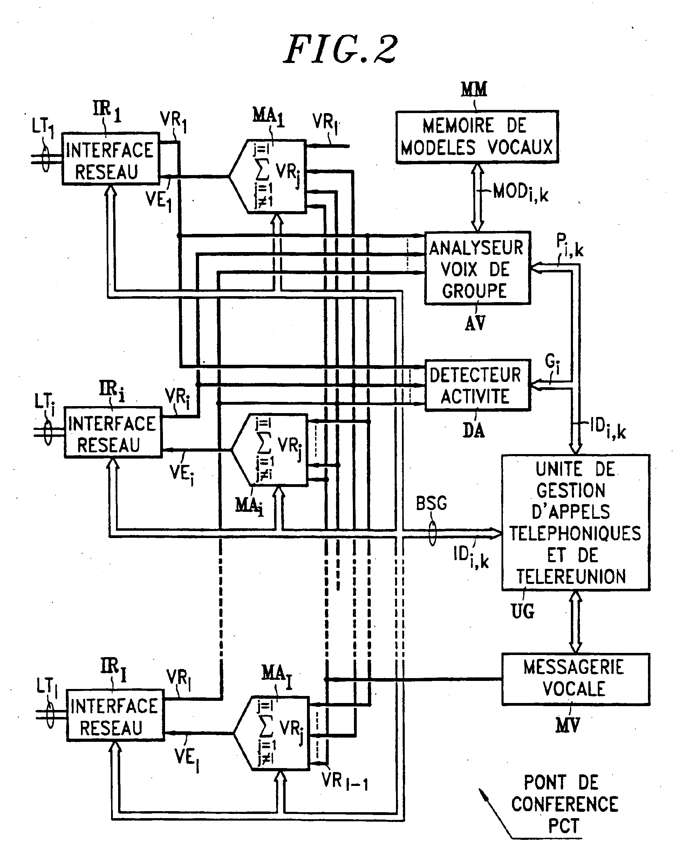

Comme cela apparaît à la figure 2, le pont de conférence PCT comprend, en outre selon l'invention, un détecteur d'activité de ligne DA et un analyseur de voix de groupe AV qui sont chacun reliés en écoute aux voies de réception de parole VR₁ à VR_{I}.

Le détecteur DA détecte parmi les voies de réception, celle qui est la plus active et qui transmet la voix de l'intervenant courant au cours d'une téléréunion. Le détecteur DA établit l'adresse Gᵢ de la voie VRᵢ ou de la liaison de transmission lti-LTi la plus active, c'est-à-dire du groupe de participants le plus actif. L'adresse Gᵢ constitue une partie de l'identifiant de l'intervenant et est appliquée à l'unité de gestion UG et à l'analyseur AV.

L'analyseur de voix AV sélectionner la voie de réception de parole VRᵢ correspondant à l'adresse de la plus active liaison Gᵢ établie par le détecteur DA afin d'y extraire un segment vocal SGᵢ qu'il analyse. Une mémoire MM enregistre des modèles vocaux des participants à une téléréunion qui sont établis préalablement et/ou au début d'une téléréunion par l'analyseur de voix AV sous la commande de l'unité de gestion UG. Un modèle vocal MOD_{i,k} est associé à l'adresse P_{i,k} du kième participant appartenant au groupe Gᵢ avec 1 ≤ k ≤ Kᵢ.

Au cours d'une période T pendant une téléréunion, l'analyseur AV compare le segment vocal SGᵢ dans la voie de réception active VRᵢ avec les modèles de voix MOD_{i,l} à MOD_{i,Ki}, comme cela est décrit ci-après, pour déterminer le participant qui a pris la parole dans le groupe actif Gᵢ afin de l'identifier en tant qu'intervenant au moins par l'adresse P_{i,k}, par exemple composée de ses nom et prénom. L'adresse P_{i,k} de l'intervenant est associée à l'adresse Gᵢ de son groupe produite par le détecteur DA afin que l'unité de gestion UG diffuse un identifiant ID_{i,k} [P_{i,k}, Gᵢ] vers tous les autres terminaux T₁ à T_{I} à travers les interfaces de réseau IR₁ à IR_{I}.

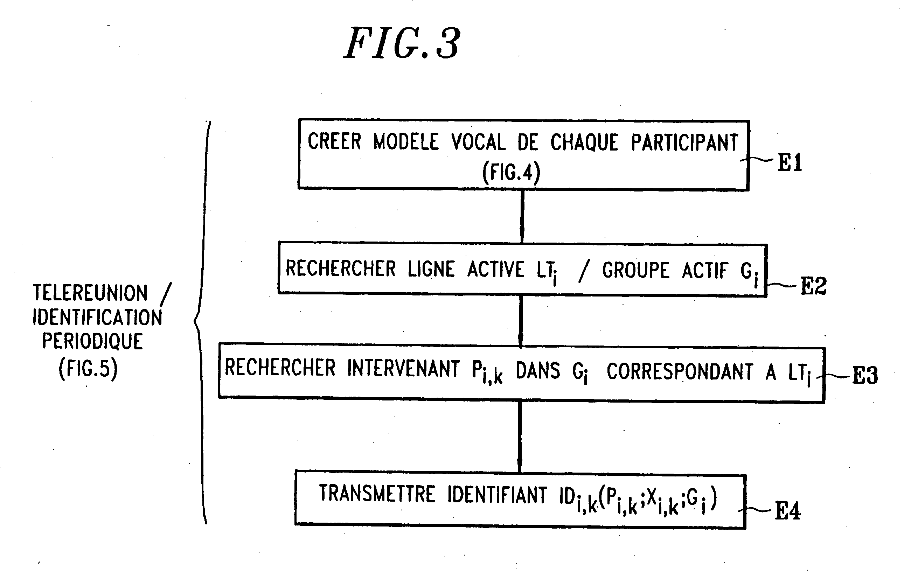

Comme montré à la figure 3, le procédé d'identification d'intervenant selon une réalisation préférée de l'invention comprend quatre étapes principales E1 à E4 pour créer des modèles vocaux des participants à une téléréunion, rechercher une liaison active, c'est-à-dire le groupe auquel un participant, dit intervenant, ayant pris la parole appartient, rechercher l'intervenant dans le groupe actif, et transmettre l'identifiant de l'intervenant par le pont de conférence PCT vers les terminaux T₁ à T_{I}.

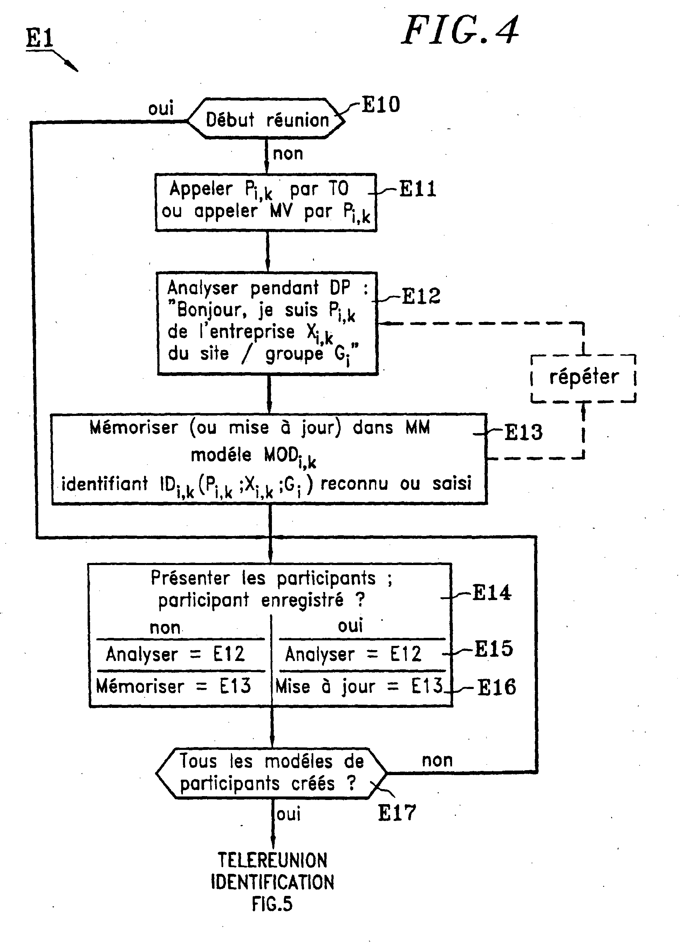

Le modèle vocal d'un participant à une téléréunion peut être enregistré en différé, antérieurement à la téléréunion, ou au début de la téléréunion, comme indiqué à une première sous-étape E10 dans l'algorithme de création de modèle vocal E1 montré à la figure 4.

Si l'enregistrement du modèle vocal doit précéder la téléréunion, le terminal organisateur TO appelle à travers le pont PCT un participant P_{i,k} situé au niveau d'un terminal quelconque connu de l'organisateur, ou bien le participant lui-même P_{i,k} appelle depuis un terminal téléphonique quelconque la messagerie vocale MV dans le pont PCT à une sous-étape E11.

A la sous-étape suivante E12, l'organisateur ou la messagerie vocale invite le participant P_{i,k} à prononcer une phrase libre du genre suivant, excédant une durée minimale prédéterminée DP :
"Bonjour, je suis le participant P_{i,k} de l'entreprise X_{i,k} du site Gi",
dans laquelle P_{i,k} est par exemple les nom et prénom du participant, X_{i,k} le nom de son entreprise et Gᵢ le nom du site du terminal Tᵢ. Un modèle vocal MOD_{i,k} défini par des caractéristiques déterminées de la voix du participant P_{i,k} est construit dans l'analyseur selon un algorithme d'analyse prédéterminée appliqué à la phrase prononcée précédente. Le modèle vocal MODᵢ,ₖ, dit également référence acoustique, est enregistré avec l'identifiant IDᵢ,ₖ [Pᵢ,ₖ ; Xᵢ,ₖ ; Gᵢ] du participant P_{i,k} dans la mémoire MM à la sous-étape E13.

Afin que le modèle vocal MOD_{i,k} puisse servir de référence dans les analyses ultérieures de la voix du participant segmentée périodiquement et particulièrement afin de distinguer cette voix parmi d'autres, la phrase à prononcer est suffisamment longue et dure au moins DP = 5 s environ par exemple. Pendant cette durée d'apprentissage DP, le modèle est créé dans l'analyseur AV et répertorié à une adresse correspondant au participant P_{i,k} dans la mémoire MM. La communication téléphonique entre le participant et le pont PCT est ensuite rompue si la téléréunion est prévue ultérieurement.

En variante, lorsque l'analyseur AV est incapable de reconnaître l'un des paramètres P_{i,k}, X_{i,k} , Gᵢ, il le signale au terminal d'organisateur TO ou à la messagerie vocale MV afin d'inviter le participant à répéter la phrase, ou le paramètre incompris, ou afin d'inviter l'organisateur ou le participant à saisir au clavier de son terminal le ou les paramètres incompris P_{i,k}, X_{i,k} et Gᵢ en confirmation de la phrase prononcée.

A la sous-étape E13, si le participant P_{i,k} utilise fréquemment le service de téléréunion avec le pont PCT, il est déjà répertorié dans la mémoire MM, les paramètres [P_{i,k} ; X_{i,k} ; Gᵢ] peuvent être reconnus par l'analyseur de voix AV, et le modèle MOD_{i,k} est mis à jour pour garantir de bonnes performances d'identification vocale au regard d'un changement récent possible de caractéristiques de la voix.

Selon l'alternative à la sous-étape E10, ou après plusieurs ensembles de sous-étapes E11 à E13, l'organisateur initie le début de la téléréunion à la sous-étape E14. En fonction du répertoire des participants de la téléréunion affiché dans le terminal TO, l'organisateur invite l'un après l'autre au moins les participants P_{i,k} dont aucun modèle vocal n'est enregistré ou un modèle vocal ancien est enregistré dans le pont PCT à se présenter aux autres participants, particulièrement aux autres groupes de participants, en prononçant une phrase du genre ci-dessus, et ainsi à effectuer des sous-étapes E15 et E16 analogues aux sous-étapes E12 et E13. La création d'un modèle vocal pour chaque participant est commandée dans l'analyseur AV par l'organisateur depuis le terminal TO à travers l'unité UG, et la voix du participant se présentant P_{i,k} est diffusée vers les terminaux T₁ à T_{I} par des commandes appropriées de l'unité UG depuis le terminal TO.

La création de modèles vocaux aux sous-étapes E15 et E16 juste au début de la téléréunion améliore les performances d'identification vocale par l'analyseur AV au cours de la téléréunion, comparativement à une création préalable des modèles vocaux aux sous-étapes E12 et E13 pour une même durée de parole servant à la création du modèle. Le laps de temps entre la phase d'apprentissage E15-E16 et l'étape d'identification E3 proprement dite, c'est-à-dire de reconnaissance de voix, est très réduit, ce qui amoindrit notablement les effets perturbants dûs à des changements, évolutions et vieillissements de la voix du participant. La phase d'apprentissage E15-E16 et l'étape d'identification E3 proprement dite se déroulent à travers le même terminal Tᵢ et la même liaison de transmission ltᵢ-LTᵢ entre le terminal Tᵢ et le pont PCT, ce qui maintient les mêmes prise de son et mode de transmission téléphonique au cours des identifications du participant, en tant qu'intervenant pendant la téléréunion.

Au début de la téléréunion, lorsque tous les participants sont recensés et leurs modèles vocaux de référence sont établis et enregistrés à la dernière sous-étape E17, les participants peuvent converser librement, les intervenants étant identifiés au fur et à mesure du déroulement de la téléréunion aux étapes cycliques E2, E3 et E4 décrites ci-après, comprenant respectivement des sous-étapes E20 à E22, E30 à E36, et E40 et E41.

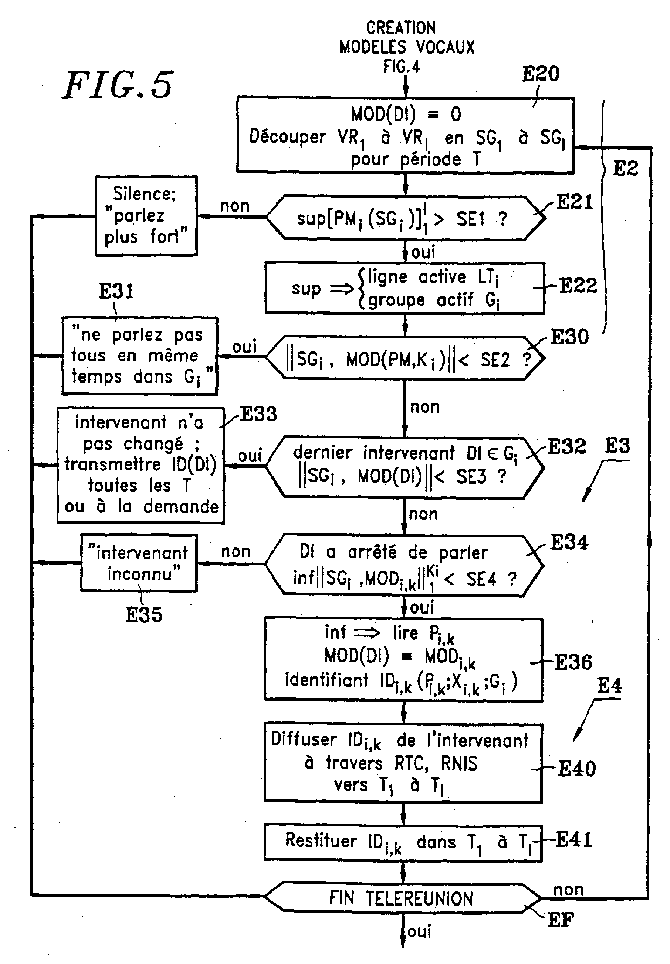

Dans la suite, en référence à la figure 5, il est supposé que le participent P_{i,k} dans le groupe Gᵢ à proximité du terminal Tᵢ prend la parole. On remarquera, en pratique, que dans l'algorithme de la figure 5 principalement mis en oeuvre dans le détecteur d'activité DA et l'analyseur de voix AV, le résultat de chacune des sous-étapes de détermination de puissance moyenne ou de distance dans les étapes E2 et E3 est issu d'une convergence de plusieurs sous-résultats selon des critères prédéterminés pendant une période variable de 0, 1 s à 5 s environ, chaque sous-résultat étant évalué pendant une sous-période de 10 ms à 20 ms environ, afin de déterminer pendant chaque période, le groupe actif et l'intervenant dans celui-ci. La période T est suffisante pour analyser des segments vocaux dans les voies de réception VR₁ à VR_{I} et y reconnaître une voix particulière d'intervenant.

L'algorithme de la figure 5 contient quelques sous-étapes incluant une détermination de distance ; plus généralement, cette détermination peut être remplacée par une mesure de similarité ou de vraisemblance entre un segment vocal et un modèle vocal.

Préalablement, en début de réunion, un modèle de dernier intervenant MOD(DI) est mis à zéro.

La recherche d'une ligne active repose sur un découpage des signaux vocaux dans les voies de réception VR₁ à VR_{I} en des segments vocaux parallèles SG₁ à SG_{I} pendant chaque période T, à la sous-étape E20. Ce découpage est réalisé dans le détecteur DA et l'analyseur AV.

Le détecteur d'activité DA moyenne les puissances PM₁ à PM_{I} des segments SG₁ à SG_{I} pendant la période T et détermine la puissance moyenne maximale pendant cette période, sous réserve qu'elle soit supérieure à un premier seuil SE1, à la sous-étape E21. Si la puissance moyenne maximale est inférieure à SE1, le détecteur d'activité DA confirme un "silence" au cours de la téléréunion à l'unité de gestion UG qui ne diffuse aucun identifiant. L'algorithme retourne normalement à la sous-étape E20, à travers une sous-étape finale EF si la téléréunion n'est pas terminée, ou si le procédé d'identification n'est pas interrompu dans le pont PCT par l'organisateur notamment. Lorsque le "silence" se prolonge ou un faible bruit persiste, l'organisateur peut intervenir pour inviter les participants à parler plus fort, en complément aux commandes - automatiques de gain incluses aux extrémités des liaisons lt₁ - LT₁ à lt_{I} - LT_{I} entre pont et terminaux.

A la sous-étape E22, le détecteur AV identifie la voie de réception VRᵢ et donc la ligne active LTᵢ qui correspondent à la puissance moyenne maximale précédemment déterminée. Le détecteur AV fournit alors le nom du groupe actif Gᵢ associé à la ligne active LTᵢ en tant que partie de l'identifiant de intervenant à l'analyseur AV. L'analyseur et l'unité de gestion UG adressent en lecture l'ensemble des modèles vocaux MOD_{i,1} à MOD_{i,Ki} des Kᵢ participants du groupe Gᵢ dans la mémoire MM et sélectionnent le segment SGᵢ dans la voie de réception VRᵢ pour l'analyser à l'étape E3.

L'analyseur de voix AV recherche alors l'intervenant P_{i;k} dans le groupe actif Gᵢ selon les sous-étapes E30 à E36 de l'étape principale E3 dont les sous-étapes E30 à E33 sont optionnelles.

De préférence préalablement, l'analyseur vérifie à une sous-étape E30 qu'il est en mesure de distinguer une voix de participant dans le segment vocal SGᵢ. Cette vérification consiste à déterminer la distance entre des caractéristiques prédéterminées du segment SGᵢ, exprimées sous forme de composantes vectorielles, et celles d'un modèle générique représentatif d'une prise de parole multiple MOD (PM, Kᵢ) pour le nombre de participants Kᵢ dans le groupe Gᵢ. Si la distance ∥SGᵢ, MOD(PM,Kᵢ)∥ est inférieure à un seuil prédéterminé SE2, le segment SGᵢ contient plusieurs voix de participants du groupe Gᵢ ayant pris la parole simultanément pendant la période T. Ceci est significatif d'un brouhaha dans lequel l'analyseur AV est incapable de sélectionner un locuteur prépondérant. A la sous-étape E31, l'analyseur AV commande alors l'unité UG pour que la messagerie vocale MV transmette un message vocal d'alerte du type : "Plusieurs personnes parlent dans le groupe Gᵢ" ou "Ne parlez pas tous en même temps dans le groupe Gᵢ", ou pour que l'unité UG transmette un message affichable analogue au message vocal, au moins dans la voie d'émission VEᵢ. L'algorithme va ensuite à l'étape EF.

Lorsque la distance déterminée à la sous-étape E30 est supérieure au seuil SE2, l'analyseur AV vérifie que l'intervenant courant ayant émis le segment SGᵢ est le même que pendant la période précédente T à la sous-étape E32. L'analyseur compare la distance entre le segment courant SGᵢ et le modèle MOD(DI) du dernier intervenant DI qui peut appartenir à n'importe quel groupe, y compris le groupe Gᵢ, à un seuil prédéterminé SE3 qui peut être égal au seuil SE2, en sachant qu'au début de la téléréunion, la distance entre le segment SGᵢ du premier intervenant et MOD(DI) = 0 est considérée comme très supérieure à SE2. A l'étape E32, selon une autre variante, le segment courant SGᵢ et le segment SGᵢ à la période précédente T sont comparés pour y détecter une rupture de signal vocal indiquant un changement de locuteur ; ou bien ces deux variantes sont combinées.

Si cette distance est inférieure au seuil SE3, l'intervenant n'a pas changé à la sous-étape E33. L'unité de gestion UG n'a pas besoin de transmettre à nouveau l'identifiant du dernier intervenant. Toutefois, l'unité UG rafraîchit la mémoire des participants en diffusant périodiquement l'identifiant du dernier intervenant vers les terminaux T₁ à T_{I}, par exemple toutes les P = 5 secondes environ, tant que ledit dernier intervenant parle.

Selon une variante de la sous-étape E33, l'unité UG retransmet l'identifiant du dernier intervenant qu'aux participants dont les terminaux ont émis une demande de transmission d'identifiant d'intervenant au moyen d'un code spécifique composé sur les claviers de ces terminaux. Cette variante permet à un participant distrait ou momentanément absent de connaître l'identité du dernier intervenant, notamment lorsque l'intervention de celui-ci est particulièrement longue.

Lorsque le dernier intervenant DI a cessé de parler à la sous-étape E32, l'analyseur AV détermine à la sous-étape suivante E34 les distances entre le segment SGᵢ et les modèles MOD_{i,1} à MODᵢ,_{Ki} des Kᵢ participants dans le groupe actif Gᵢ désigné par le détecteur DA à la sous-étape E22. L'analyseur AV compare la plus petite de ces distances avec un seuil prédéterminé SE4 qui peut être égal au seuil SE3 ou SE2. Si la plus petite distance ∥SGᵢ, MODᵢ,ₖ∥ est supérieure à SE4 avec k ∈ [1, Kᵢ], l'analyseur AV commande à l'unité de gestion UG de faire diffuser par la messagerie MV un message vocal, ou par l'interface IRᵢ un message affichable "intervenant inconnu" à la sous-étape E35, l'algorithme passant ensuite à l'étape EF.

Par contre, lorsque la plus petite distance précitée est inférieure à SE4, c'est-à-dire lorsque le segment SGᵢ présente une certaine similarité ou cohérence avec le modèle MOD_{i,k}, l'analyseur lit dans la mémoire MM la désignation P_{i,k} du participant correspondant, éventuellement accompagnée d'autres paramètres comme le nom de l'entreprise X_{i,k} à la sous-étape E36, pour les appliquer à l'unité de gestion UG qui les associe au paramètre Gᵢ pour constituer l'identifiant ID_{i,k}·

Au cours de la sous-étape E36, l'unité de gestion UG ayant reçu les paramètres Gᵢ du détecteur DV et P_{i,k} et X_{i,k} de l'analyseur AV compose un message vocal ou visuel contenant l'identifiant ID_{i,k} [P_{i,k}, X_{i,k}, Gᵢ].

En général, ce message est diffusé vers tous les terminaux T₁ à T_{I} à travers les interfaces de réseau correspondants à la sous-étape E40. Ce message, comme les autres messages de téléréunion établis par l'unité de gestion UG aux sous-étapes E31, E33 et E35, est transmis :
- soit sous forme de signal numérique en coupure des signaux vocaux dans les voies d'émission correspondantes VE₁ à VE_{I} afin d'être restitué à la sous-étape E41 par des écouteurs ou des haut-parleurs individuels et/ou des haut-parleurs communs dans les terminaux,
- soit sous forme de signal visuel par multiplexage numérique ou fréquentiel en fonction du mode de transmission du réseau RNIS ou RTC afin d'être visualisé à la sous-étape E41 dans les terminaux, par exemple dans des afficheurs de postes téléphoniques ou radiotéléphoniques ou dans des écrans de terminaux ; les messages visuels sont exprimés en caractères alphanumériques avec ou sans symboles ; par exemple, un point d'interrogation signifie "Intervenant inconnu" à la sous-étape E35.

Ces messages sont également transmis par le pont PCT au terminal TO = T₁ pour que l'organisateur puisse suivre et animer la téléréunion ; les identifiants garantissent l'identité des participants, par exemple à l'occasion d'un vote, ce qui exclut toute falsification d'identité en cours de téléréunion. Ces messages sont également transmis au serveur de conférence SER pour établir des statistiques notamment sur les temps de parole due chaque participant, ou de chaque groupe.

Si le réseau de transmission est de type RNIS, les messages de téléréunion affichables, tels que ceux contenant un identifiant, établis par l'unité UG sont de préférence compris dans de la signalisation d'usager à usager transférée à travers le canal D. Les messages affichables sont ainsi inclus dans des messages d'information d'usager échangés entre des usagers, en l'espèce le pont de conférence PCT et un terminal Tᵢ, et transportant jusqu'à 128 octets utiles.

Lorsque le réseau de transmission est de type analogique RTC, les messages de téléréunion affichables, tels que ceux contenant un identifiant, sont analogues au paramètre du nom du demandeur (Calling Party Name), référencé 07h selon la norme ETSI ETS 300 659-1 pour identifier le demandeur lors d'une présentation d'appel au terminal demandé. Selon l'invention, les messages affichables sont adressés par le pont de conférence aux terminaux sous la forme de paramètres non encore utilisés par les normes, tels que les paramètres Flh à FFh selon la norme ETSI précitée. Ces paramètres en mode décroché sont transmis au moyen de modems inclus dans les interfaces de réseau IR₁ à IR_{I}, par exemple en modulation de fréquence à cohérence de phase selon la recommandation V23 de l'UIT-T.

En variante, le message vocal ou visuel contenant l'identifiant d'intervenant ID_{i,k} n'est diffusé que vers des terminaux prédéterminés à leurs demandes à la sous-étape E40. Chaque terminal qui souhaite connaître l'identité de l'intervenant transmet un message de demande d'identité d'intervenant, par exemple à la suite d'un code spécifique composé au clavier, comme déjà indiqué en variante pour la sous-étape E33. Les messages de demande sont écrits en mémoire de l'unité de gestion UG en dépendance des adresses des terminaux correspondants. L'unité UG lit les messages de demande à chaque période T pour n'appliquer le message vocal ou visuel d'identifiant d'intervenant qu'aux ensembles d'interface-mélangeur IR₁-MA₁ à IR_{I}-MA_{I} correspondant aux terminaux correspondants.

Bien que l'invention ait été décrite ci-dessus relativement à un pont de conférence très éloigné des terminaux, celle-ci n'est pas limitée à cette réalisation mais englobe d'autres répartitions des terminaux et des fonctionnalités incluses dans le pont de conférence. Par exemple, le pont de conférence est un périphérique d'un commutateur téléphonique privé PABX desservant les terminaux. Selon un autre exemple, les fonctionnalités du pont de conférence sont incluses dans le terminal d'organisateur TO, c'est-à-dire dans l'un T₁ = TO des terminaux. En dépendance de liaisons, y compris de type radiotéléphonique, à l'entité incluant les fonctionnalités du pont de conférence selon l'invention, les interfaces de réseau IR₁ à IR_{I} peuvent être réunies en une seule interface reliée à une seule liaison de transmission analogique ou numérique dans laquelle les voies VR₁ à VR_{I} et VE₁ à VE_{I} sont multiplexées fréquentiellement ou numériquement.

Dans le cas de la configuration minimale avec un groupe G₁ avec un participant P_{1,1} et un groupe G₂ avec deux participants P₂,₁ et P₂,₂, les fonctionnalités du pont de conférence selon l'invention sont de préférence incluses dans le terminal T₁, ce qui permet au participant P_{1,1} de distinguer la voix du participant P_{2,1}, tel que le propriétaire du terminal T₂, par exemple un radiotéléphone, d'un utilisateur occasionnel P₂,₂ du terminal T₂.

## Revendications

1. - Procédé pour identifier un intervenant parmi des participants répartis en des groupes (G₁ à G_{I}) à proximité de terminaux téléphoniques (T₁ à T_{I}) lors d'une téléréunion gérée par l'intermédiaire d'un dispositif de conférence (PCT) relié aux terminaux à travers des liaisons de transmission (lt₁ - LT₁ à lt_{I} - LT_{I}), **caractérisé en ce qu'**il comprend, après identification (E3) de la voix de l'intervenant (P_{i,k}) en réception dans les liaisons par le dispositif de conférence (PCT), les étapes de :
diffuser (E40) un identifiant (ID_{i,k}) de l'intervenant identifié dans les liaisons depuis le dispositif de conférence (PCT) vers les terminaux (T₁ à T_{I}), et
restituer l'identifiant (ID_{i,k}) de l'intervenant dans les terminaux (T₁ à T_{I}).

2. - Procédé conforme à la revendication 1, selon lequel l'identifiant (ID_{i,k}) de l'intervenant comprend au moins le nom du participant (P_{i,k}), de préférence complété par au moins une désignation du groupe (Gᵢ) auquel il appartient.

3. - Procédé conforme à la revendication 1 ou 2, selon lequel l'identifiant (ID_{i,k}) de l'intervenant est obtenu par reconnaissance de parole dans le dispositif de conférence (PCT).

4. - Procédé conforme à l'une quelconque des revendications 1 à 3, selon lequel l'identifiant (ID_{i,k}) n'est diffusé que vers des terminaux en réponse respectivement à des demandes de ceux-ci au dispositif de conférence.

5. - Procédé conforme à l'une quelconque des revendications 1 à 4, selon lequel l'identifiant (ID_{i,k}) de l'intervenant est diffusé sous forme de message vocal en coupure ou en superposition de signaux vocaux de participant dans les liaisons (lt₁ - LT₁ à lt_{I} - LT_{I}) et est restitué acoustiquement par les terminaux.

6. - Procédé conforme à l'une quelconque des revendications 1 à 4, selon lequel l'identifiant (ID_{i,k}) de l'intervenant est diffusé sous forme de message de signalisation dans les liaisons et est restitué visuellement dans les terminaux.

7. - Procédé conforme à l'une quelconque des revendications 1 à 6, selon lequel le dispositif de conférence (PCT) est inclus dans l'un des terminaux.

8. - Procédé conforme à l'une quelconque des revendications 1 à 6, selon lequel le dispositif de conférence (PCT) est inclus dans un commutateur téléphonique privé desservant les terminaux.

9. - Procédé conforme à l'une quelconque des revendications 1 à 8, **caractérisé en ce que** l'identification de l'intervenant dans le dispositif de conférence (PCT) comprend les étapes de :
- rechercher (E21) en réception la plus active des liaisons (lt₁ - LT₁ à lt_{I} - LT_{I}),
- identifier (E22) le groupe (Gᵢ) correspondant à la plus active liaison en réception (VRᵢ),
- déterminer (E34) la plus grande similitude entre un segment vocal (SGᵢ) dans la plus active liaison et des modèles vocaux (MOD_{i,1} à MOD_{i,Ki}) des participants appartenant au groupe identifié (Gᵢ), et
- identifier (E36) le participant (P_{i,k}) correspondant à la plus grande similitude déterminée, en tant qu'intervenant.

10. - Procédé conforme à la revendication 9, selon lequel l'étape de rechercher en réception la plus active des liaisons (E21) consiste à rechercher la plus grande des puissances moyennes de segments vocaux (SG₁ à SG_{I}) dans les voies de réception (VR₁ à VR_{I}) des liaisons de transmission à condition qu'elle soit supérieure à un seuil prédéterminé (SE1).

11. - Procédé conforme à la revendication 9 ou 10, selon lequel le participant (P_{i,k}) correspondant à la plus grande similitude déterminée n'est pas identifié et un message d'intervenant inconnu (E35) est diffusé vers les terminaux lorsque la plus grande similitude déterminée est inférieure à un seuil prédéterminé.

12. - Procédé conforme à l'une quelconque des revendications 9 à 11, selon lequel les modèles vocaux (MOD₁,₁ à MOD_{I},_{KI}) des participants sont créés et mis à jour (E1) dans le dispositif de conférence au plus tard au début de la téléréunion (E11-E13), et résultent de l'analyse vocale d'un genre de phrase excédant une durée minimale prédéterminée, de préférence contenant au moins une partie d'identifiant de participant (Pᵢ,ₖ).

13. - Procédé conforme à l'une quelconque des revendications 9 à 12, comprenant une étape (E30) de déterminer la similitude entre le segment vocal (SGᵢ) dans la plus active liaison en réception (VRᵢ) et un modèle vocal (MOD(PM,Kᵢ)) de prise de parole multiple, de préférence spécifique au nombre de participants dans le groupe identifié (Gᵢ), afin que le dispositif de conférence (PCT) diffuse (E31) un message de prise de parole multiple vers les terminaux (T₁ à T_{I}) lorsque ladite similitude déterminée est supérieure à un seuil prédéterminé.

14. - Procédé conforme à l'une quelconque des revendications 9 à 13, comprenant une étape (E32) de déterminer la similitude entre le segment vocal (SGᵢ) dans la plus active liaison en réception (VRᵢ) et le modèle vocal (MOD(DI)) d'un dernier intervenant afin que le dispositif de conférence (PCT) ne diffuse aucun identifiant, ou ne diffuse (E33) l'identifiant (ID(DI)) du dernier intervenant que périodiquement vers les terminaux ou que vers des terminaux respectivement en réponse à des demandes de ceux-ci au dispositif de conférence (PCT), lorsque ladite similitude est supérieure à un seuil prédéterminé.

15. - Dispositif de conférence (PCT) relié à des terminaux téléphoniques (T₁ à T_{I}) à travers des liaisons de transmission (lt₁ - LT₁ à lt_{I} - LT_{I}) pour gérer une téléréunion entre des participants répartis en des groupes (G₁ à G_{I}) à proximité des terminaux, **caractérisé en ce qu'**il comprend un moyen (DA) pour détecter périodiquement la plus active liaison en réception (VRᵢ) afin d'identifier le groupe (Gᵢ) correspondant à la plus active liaison en réception, un moyen (AV) pour comparer périodiquement un segment vocal dans la plus active liaison en réception avec des modèles vocaux mémorisés (MOD_{i,1} à MOD_{i,Ki}) des participants appartenant au groupe identifié (Gᵢ) afin d'identifier le participant (Pᵢ,ₖ), en tant qu'intervenant, correspondant à la plus grande similitude entre ledit segment vocal et les modèles vocaux, un moyen (UG) pour établir un identifiant (ID_{i,k}) de l'intervenant identifié, et un moyen (IR₁ à IR_{I}) pour diffuser l'identifiant d'intervenant dans des liaisons (lt₁ - LT₁ à lt_{I} - LT_{I}) vers les terminaux (T₁ à T_{I}).

## Claims

1. Method for identifying an attendee amongst participants divided into groups (G₁ to G_{I}) close to telephone terminals (T₁ to T_{I}) during a telemeeting managed by means of a conference device (PCT) connected to the terminals over transmission links (lt₁ - LT₁ to lt_{I} - LT_{I}), **characterized in that** it comprises, after identification (E3) of the voice of the attendee (P_{i,k}) being received in the links by the conference device (PCT), the steps of:
broadcasting (E40) an identifier (ID_{i,k}) of the attendee identified in the links from the conference device (PCT) to the terminals (T₁ to T_{I}), and
restoring the identifier (ID_{i,k}) of the attendee in the terminals (T₁ to T_{I}) .

2. Method according to Claim 1, according to which the identifier (IDᵢ,ₖ) of the attendee comprises at least the name of the participant (P_{i,k}) , preferably supplemented by at least one designation of the group (Gᵢ) to which he belongs.

3. Method according to Claim 1 or 2, according to which the identifier (ID_{i,k}) of the attendee is obtained by speech recognition in the conference device (PCT).

4. Method according to any one of Claims 1 to 3, according to which the identifier (ID_{i,k}) is broadcast only to terminals in response respectively to requests from the latter to the conference device.

5. Method according to any one of Claims 1 to 4, according to which the identifier (ID_{i,k}) of the attendee is broadcast in the form of a voice message splitting or superposing participant voice signals in the links (lt₁ - LT₁ to lt_{I} - LT_{I}) and is restored acoustically by the terminals.

6. Method according to any one of Claims 1 to 4, according to which the identifier (ID_{i,k}) of the attendee is broadcast in the form of signalling message in the links and is restored visually in the terminals.

7. Method according to any one of Claims 1 to 6, according to which the conference device (PCT) is included in one of the terminals.

8. Method according to any one of Claims 1 to 6, according to which the conference device (PCT) is included in a private branch exchange serving the terminals.

9. Method according to any one of Claims 1 to 8, **characterized in that** the identification of the attendee in the conference device (PCT) comprises the steps of:
- looking for (E21) in receive mode the most active of the links (lt₁ - LT₁ to lt_{I} - LT_{I}) ,
- identifying (E22) the group (Gᵢ) corresponding to the most active link in receive mode (VRᵢ),
- determining (E34) the greatest similarity between a voice segment (SGᵢ) in the most active link and voice models (MOD_{i,1} to MOD_{i,Ki}) of the participants belonging to the identified group (Gᵢ), and
- identifying (E36) the participant (P_{i,k}) corresponding to the greatest determined similarity, as an attendee.

10. Method according to Claim 9, according to which the step of searching for, in receive mode, the most active of the links (E21) consists in searching for the greatest of the average powers of voice segments (SG₁ to SG_{I}) in the receive channels (VR₁ to VR_{I}) of the transmission links provided that it is greater than a predetermined threshold (SE1).

11. Method according to Claim 9 or 10, according to which the participant (P_{i,k}) corresponding to the greatest determined similarity is not identified and a message from an unknown attendee (E35) is broadcast to the terminals when the greatest determined similarity is less than a predetermined threshold.

12. Method according to any one of Claims 9 to 11, according to which the voice models (MOD_{1,1} to MOD_{I,KI}) of the participants are created and updated (E1) in the conference device no later than the beginning of the telemeeting (E11-E13), and result from a voice analysis of a phrase kind exceeding a predetermined minimal duration, preferably containing at least one portion of participant identifier (P_{i,k}).

13. Method according to any one of Claims 9 to 12, comprising a step (E30) of determining the similarity between the voice segment (SGᵢ) in the most active link in receive mode (VRᵢ) and a voice model (MOD(PM,Kᵢ)) of multiple speech, preferably specific to the number of participants in the identified group (Gᵢ), so that the conference device (PCT) broadcasts (E31) a multiple speech message to the terminals (T₁ to T_{I}) when said determined similarity is greater than a predetermined threshold.

14. Method according to any one of Claims 9 to 13, comprising a step (E32) of determining the similarity between the voice segment (SGᵢ) in the most active link in receive mode (VRᵢ) and the voice model (MOD(DI)) of a latest attendee so that the conference device (PCT) broadcasts no identifier, or broadcasts (E33) the identifier (ID(DI)) of the latest attendee only periodically to the terminals or only to terminals respectively in response to requests from the latter to the conference device (PCT), when said similarity is greater than a predetermined threshold.

15. Conference device (PCT) connected to telephone terminals (T₁ to T_{I}) over transmission links (lt₁ - LT₁ to lt_{I} - LT_{I}) in order to manage a telemeeting between the participants divided into groups (G₁ to G_{I}) close to terminals, **characterized in that** it comprises a means (DA) for periodically detecting the most active link in receive mode (VRᵢ) in order to identify the group (Gᵢ) corresponding to the most active link in receive mode, a means (AV) for periodically comparing a voice segment in the most active link in receive mode with stored voice models (MOD_{i,1} to MOD_{i,Ki}) of the participants belonging to the identified group (Gᵢ) in order to identify the participant (P_{i,k}), as an attendee, corresponding to the greatest similarity between said voice segment and the voice models, a means (UG) for establishing an identifier (ID_{i,k}) of the identified attendee, and a means (IR₁ to IR_{I}) for broadcasting the attendee identifier in the links (lt₁ - LT₁ to lt_{I} - LT_{I}) to the terminals (T₁ to T_{I}) .

## Patentansprüche

1. Verfahren zur Identifizierung eines Sprechers unter in Gruppen verteilten Teilnehmern (G₁ bis G_{I}) in der Nähe von Telefonendgeräten (T₁ bis T_{I}) anlässlich einer über eine mit den Endgeräten durch Übertragungsverbindungen (lt₁ - LT₁ bis lt_{I} - LT_{I}) verbundene Konferenzvorrichtung (PCT) verwalteten Telekonferenz, **dadurch gekennzeichnet, dass** es nach Identifizierung (E3) der Stimme des Sprechers (Pi, k) beim Empfang in den Verbindungen durch die Konferenzvorrichtung (PCT), die Schritte der
Sendung (E40) eines Kennzeichens (ID_{i,k}) des in den Verbindungen identifizierten Sprechers von der Konferenzvorrichtung (PCT) zu den Endgeräten (T₁ bis T_{I}), und
Wiedergabe des Kennzeichens (ID_{i,k}) des Sprechers in den Endgeräten (T₁ bis T_{I}) umfasst.

2. Verfahren nach Anspruch 1, bei welchem das Kennzeichen (ID_{i,k}) des Sprechers mindestens den Namen des Teilnehmers (P_{i,k}), vorzugsweise vervollständigt mit mindestens einer Bezeichnung der Gruppe, der er angehört, (Gᵢ), umfasst.

3. Verfahren nach Anspruch 1 oder 2, bei welchem das Kennzeichen (ID_{i,k}) des Sprechers durch Spracherkennung in der Konferenzvorrichtung (PCT) erhalten wird.

4. Verfahren nach einem der Ansprüche 1 bis 3, bei welchem das Kennzeichen (ID_{i,k}) nur zu Endgeräten gesendet wird, jeweils als Antwort auf Anträge, die diese an die Konferenzvorrichtung gesendet haben.

5. Verfahren nach einem der Ansprüche 1 bis 4, bei welchem das Kennzeichen (ID_{i,k}) des Sprechers als gesprochene Mitteilung in Abtrennung oder Überlagerung von Sprachsignalen von Teilnehmern in den Verbindungen (lt₁ - LT₁ bis lt_{I} - LT_{I}) gesendet und akustisch durch die Endgeräte wiedergegeben wird.

6. Verfahren nach einem der Ansprüche 1 bis 4, bei welchem das Kennzeichen (ID_{i,k}) des Sprechers als Signalmeldung in den Verbindungen gesendet und visuell in den Endgeräten wiedergegeben wird.

7. Verfahren nach einem der Ansprüche 1 bis 6, bei welchem die Konferenzvorrichtung (PCT) in einem der Endgeräte enthalten ist.

8. Verfahren nach einem der Ansprüche 1 bis 6, bei welchem die Konferenzvorrichtung (PCT) in der privaten Fernsprechvermittlungsanlage enthalten ist, die die Endgeräte versorgt.

9. Verfahren nach einem der Ansprüche 1 bis 8, **dadurch gekennzeichnet, dass** die Sprecheridentifizierung in der Konferenzvorrichtung (PCT) die Schritte enthält :
- Suchen (E21) der beim Empfang wirksamsten Verbindungen (lt₁ - LT₁ bis lt_{I} - LT_{I}) ,
- Identifizierung (E 22) der der beim Empfang (Vrᵢ) wirksamsten Verbindung entsprechenden Gruppe (Gᵢ),
- Bestimmung (E34) der größten Ähnlichkeit zwischen einem Sprachsegment (SGᵢ) in der wirksamsten Verbindung und Sprachmodellen (MOD_{i,1} bis MOD_{i,Ki}) der zur identifizierten Gruppe (Gᵢ) gehörenden Teilnehmer, und
- Identifizierung (E36) des Teilnehmers (P_{i,k}), der der größten bestimmten Ähnlichkeit entspricht, als Sprecher.

10. Verfahren nach Anspruch 9, bei welchem die Suche nach der beim Empfang wirksamstem Verbindung (E21) darin besteht, die höchste der durchschnittlichen Leistungen der Sprachsegmente (SG₁ bis SG_{I}) in den Empfangswegen (VR₁ bis VR_{I}) der Übertragungsverbindungen zu ermitteln, mit der Bedingung, dass sie einen vorbestimmten Schwellwert (SE1) überschreitet.

11. Verfahren nach Anspruch 9 oder 10, bei welchem der Teilnehmer (P_{i,k}) , der der größten bestimmten Ähnlichkeit entspricht, nicht identifiziert wird und eine Meldung eines unbekannten Sprechers (E35) zu den Endgeräten gesendet wird, wenn die größte bestimmte Ähnlichkeit kleiner als ein vorbestimmter Schwellwert ist.

12. Verfahren nach einem der Ansprüche 9 bis 11, bei welchem die Sprachmodelle (MOD_{1,1} bis MOD_{I,KI}) der Teilnehmer in der Konferenzvorrichtung spätestens bei Beginn der Telekonferenz (E11-E13) erzeugt und aktualisiert (E1) werden und sich aus der Sprachanalyse einer Satzart, die eine vorbestimmte Minimaldauer überschreitet, und vorzugsweise mindestens einen Teil des Kennzeichens des Teilnehmers (P_{i,k}) enthält, ergeben.

13. Verfahren nach einem der Ansprüche 9 bis 12, umfassend einen Schritt (E30) der Bestimmung der Ähnlichkeit zwischen dem Sprachsegment (SGᵢ) in der wirksamsten Verbindung beim Empfang (VRᵢ) und einem Sprachmodell (MOD(PM,Kᵢ)) von mehrfacher Diskussion, das vorzugsweise für die Anzahl der Teilnehmer innerhalb der identifizierten Gruppe (Gᵢ) spezifisch ist, derart, dass die Konferenzvorrichtung (PCT) eine mehrfache Diskussionsmeldung zu den Endgeräten (T₁ bis T_{I}) sendet, wenn die besagte Ähnlichkeit einen vorbestimmten Schwellwert übersteigt.

14. Verfahren nach einem der Ansprüche 9 bis 13, umfassend einen Schritt (E32) der Ähnlichkeitsbestimmung zwischen dem Sprachsegment (SGᵢ) in der beim Empfang wirksamsten Verbindung (VRᵢ) und dem Sprachmodell (MOD(DI)) eines letzten Sprechers, derart, dass die Konferenzvorrichtung (PCT) kein Kennzeichen oder nur das Kennzeichen (ID(DI)) des letzten Sprechers periodisch zu den Endgeräten oder nur zu Endgeräten sendet (E33), jeweils als Antwort auf Anträge, die diese an die Konferenzvorrichtung (PCT) gesendet haben, wenn die Ähnlichkeit einen vorbestimmten Schwellwert überschreitet.

15. Mit Telefonendgeräten (T₁ bis T_{I}) über Übertragungsverbindungen (lt₁ - LT₁ bis lt_{I} - LT_{I}) verbundene Konferenzvorrichtung (PCT), um eine Telekonferenz zwischen in Gruppen (G₁ bis G_{I}) in der Nähe von Endgeräten verteilten Teilnehmern zu verwalten, **dadurch gekennzeichnet, dass** sie ein Mittel (DA) umfasst, um periodisch die beim Empfang wirksamste Verbindung zu erfassen (VRᵢ), um die Gruppe (Gᵢ) zu identifizieren, die der wirksamsten Verbindung beim Empfang entspricht, ein Mittel (AV), um periodisch ein Sprachsegment in der beim Empfang wirksamsten Verbindung mit abgespeicherten Sprachmodellen (MOD_{i,1} bis MOD_{i,Ki}) der zu der identifizierten Gruppe (Gᵢ) gehörenden Teilnehmer zu vergleichen, um den Teilnehmer (P_{i,k}) als Sprecher zu identifizieren, der der größten Ähnlichkeit zwischen dem besagten Sprachsegment und den Sprachmodellen entspricht, ein Mittel (UG), um ein Kennzeichen (ID_{i,k}) des identifizierten Sprechers festzulegen, und ein Mittel (IR₁ bis IR_{I}), um das Sprecherkennzeichen in Verbindungen (lt₁ - LT_{I} bis lt_{I} - LT_{I}) zu den Endgeräten (T₁ bis T_{I}) zu senden.
